**Europäisches Patentamt**

**European Patent Office**

**Office européen des brevets**

(19)

(11) Numéro de publication: **0 041 466**

**A1**

## (12) DEMANDE DE BREVET EUROPEEN

(21) Numéro de dépôt: **81420080.4**

(22) Date de dépôt: **27.05.81**

(51) Int. Cl.³: **B 01 J 23/34**
**B 01 J 23/89, B 01 J 23/64**
**B 01 J 35/06**

(30) Priorité: **04.06.80 FR 8012701**

(43) Date de publication de la demande:
**09.12.81 Bulletin 81/49**

(84) Etats contractants désignés:
**AT BE CH DE GB IT LI LU NL SE**

(71) Demandeur: **SOCIETE LYONNAISE DES APPLICATIONS CATALYTIQUES**
**105-121, avenue du 8 mai 1945**
**Rillieux La Pape Rhône(FR)**

(72) Inventeur: **Lacroix, Alain**
**56, rue Henri Gorjus**
**Lyon 4ème Rhône(FR)**

(74) Mandataire: **Maureau, Philippe**
**Cabinet Germain & Maureau Le Britannia - Tour C 20,**
**bld Eugène Déruelle**
**F-69003 Lyon(FR)**

(54) **Nouvelle masse de contact pour catalyse hétérogène.**

(57) Cette masse de contact comprend un support de catalyseur à texture compacte, et un catalyseur contenant de l'oxyde de manganèse $Mn_3O_4$.

EP 0 041 466 A1

Croydon Printing Company Ltd.

1

La présente invention a pour objet une masse de contact pour catalyse hétérogène.

Une masse de contact comprend un catalyseur et son support.

La catalyse hétérogène est utilisée notamment dans le cadre d'appareils de chauffage destinés à produire de l'énergie calorifique sans flammes et à basse température par oxydation d'hydrocarbures.

Le catalyseur le plus efficace est constitué par le platine à l'état de mousse, qui peut être associé à un grand nombre de supports.

A titre secondaire et dans des conditions plus spécifiques, le palladium est également utilisé comme catalyseur.

Cependant, pour des raisons économiques, il a été imaginé d'utiliser des catalyseurs réalisés à partir d'éléments moins coûteux que le platine. Il est connu de réaliser un catalyseur constitué par des oxydes d'éléments tels que le cobalt, le cérium, le chrome ou l'aluminium activés par du platine, voire par du palladium.

C'est ainsi qu'ont été réalisées avec succès les associations suivantes :
- platine-alumine $Al_2O_3$ ;
- platine-oxyde de chrome $Cr_2O_3$ et oxyde de cobalt $Co_2O_3$ ;
- palladium-oxyde de cérium $CeO_2$ ;
- platine-oxyde de cérium $CeO_2$ ;
- platine-oxyde de chrome $Cr_2O_3$.

Ces catalyseurs donnent de bons rendements lorsqu'ils sont déposés sur un support à texture compacte, par exemple constitué par des fibres silico-alumineuses.

Ces masses catalytiques permettent de conduire une réaction d'oxydation d'hydrocarbures, tels que méthane, propane, butane ou heptane à son terme ultime avec des rendements proches de l'unité.

Dans la plupart des techniques utilisées, dans le domaine des appareils de chauffage ou d'autres systèmes destinés à produire de l'énergie calorifique par combustion

2

catalytique, la mise en température de la masse de contact s'effectue par inflammation d'une certaine quantité de gaz à la surface de celle-ci.

Dès que la température nécessaire à l'amorçage de la réaction est atteinte, la réaction se développe et progresse sur toute la surface active de la masse catalytique. La réaction s'entretient ensuite d'elle-même tant qu'est maintenue l'alimentation en gaz.

Si cette technique de mise en condition de la masse active est simple de mise en oeuvre, elle présente, néanmoins, l'inconvénient de laisser échapper des quantités plus ou moins importantes de gaz non brûlé. Le volume des imbrûlés est lié à la nature du support de catalyseur ainsi qu'à la nature du gaz de combustion. C'est ainsi qu'un hydrocarbure insaturé de type alcène, tel que le butène, produira plus d'imbrûlés à l'amorçage de la réaction qu'un hydrocarbure saturé de type alcane. De même, un support de texture compacte tel que l'amiante ou les fibres silico-alumineuses, favorisera la mise à l'air libre d'hydrocarbures imbrûlés.

La présente invention vise à augmenter les performances d'une masse de contact pour catalyse hétérogène en améliorant les conditions de mise en température de celle-ci.

A cet effet, la masse de contact qu'elle concerne comprend, d'une part, un support de catalyseur à texture compacte et, d'autre part, un catalyseur contenant de l'oxyde de manganèse $Mn_3O_4$, ce dernier contribuant de façon remarquable à limiter la libération d'hydrocarbures imbrûlés lors de la mise en température de la masse catalytique.

Le support de catalyseur, de texture compacte, est constitué, par exemple, par des fibres d'alumine, des fibres de silice, des fibres silico-alumineuses, ou par des produits compactés.

Ce gain d'activité catalytique est particulièrement remarquable en présence d'hydrocarbures insaturés.

3

Le résultat obtenu est tout à fait surprenant du fait que l'oxyde de manganèse n'a pas, à l'état isolé, une activité d'oxydation catalytique très marquée.

Des essais effectués en milieu étanche ont montré que, dans certains cas, l'émission des gaz imbrûlés pouvait être réduite de 75 %. Il a été constaté une réaction très vive qui conduit à une mise en température plus rapide que dans le cas traditionnel.

Il est également possible d'incorporer au catalyseur un inhibiteur de recristallisation choisi parmi les oxydes issus d'éléments à forte densité électronique.

Il est donné, ci-après, un certain nombre de compositions catalytiques conformes à l'invention et destinées à être déposées sur un support de fibres silico-alumineuses, dans lesquelles les quantités indiquées des différents composants correspondent à la saturation du support. Ces quantités ne doivent donc pas être considérées comme présentant un caractère limitatif.

- Le catalyseur est constitué par du platine, de l'oxyde de chrome $Cr_2O_3$, de l'oxyde de cobalt $Co_2O_3$ et de l'oxyde de manganèse $Mn_3O_4$. Le rapport des masses catalyseur/support est compris entre 0,0024 et 0,0075 pour le platine et de l'ordre de 0,0033 pour chaque oxyde.

- Le catalyseur est constitué par du platine, de l'oxyde de cérium $CeO_2$ et de l'oxyde de manganèse $Mn_3O_4$. Le rapport des masses catalyseur/support est de l'ordre de 0,0076 pour le platine, 0,028 pour l'oxyde de cérium et 0,033 pour l'oxyde de manganèse.

- Le catalyseur est constitué par du platine, de l'oxyde de chrome $Cr_2O_3$ et de l'oxyde de manganèse $Mn_3O_4$. Le rapport des masses catalyseur/support est compris entre 0,0024 et 0,0075 pour le platine, et de l'ordre de 0,05 pour chaque oxyde.

- Le catalyseur est constitué par du palladium, de l'oxyde de cérium $CeO_2$ et de l'oxyde de manganèse $Mn_3O_4$. Le rapport des masses catalyseur/support est de l'ordre de 0,012 pour le palladium et de 0,05 pour chaque oxyde.

4

- Le catalyseur est constitué par du platine, du palladium, de l'oxyde de cérium $CeO_2$ et de l'oxyde de manganèse $Mn_3O_4$. Le rapport des masses catalyseur/support est de l'ordre de 0,0071 pour le palladium, 0,0008 pour le platine et de 0,050 pour chaque oxyde.

Selon un mode préféré de mise en oeuvre, le catalyseur est obtenu par immersion du support dans une solution alcoolique à 70-80° contenant des sels dissous de platine, manganèse et des autres constituants, respectivement à l'état d'acide chloroplatinique et de nitrates, puis en effectuant un traitement thermique libérant le platine à l'état de mousse et les autres éléments sous forme d'oxydes.

Dans la mesure où le catalyseur contient un inhibiteur de recristallisation, celui-ci est également mis en oeuvre sous forme d'un sel soluble, de manière à obtenir, après traitement thermique, une forme syncristallisée de tous les constituants.

Comme il ressort de ce qui précède, l'invention apporte une grande amélioration à la technique existante en fournissant un catalyseur de prix de revient relativement bas puisque le nouvel élément qu'il comprend, à savoir le manganèse, est peu coûteux, tout en procurant des performances très intéressantes en minimisant l'émission d'imbrûlés lors de la mise en température de la masse catalytique, notamment avec les hydrocarbures insaturés.

5

- REVENDICATIONS -

1. - Masse de contact pour catalyse hétérogène, comprenant un support de catalyseur à texture compacte, caractérisée en ce que le catalyseur contient de l'oxyde de manganèse $Mn_3O_4$.

2. - Masse de contact selon la revendication 1, caractérisée en ce que le catalyseur est constitué par du platine, de l'oxyde de chrome $Cr_2O_3$, de l'oxyde de cobalt $Co_2O_3$ et de l'oxyde de manganèse $Mn_3O_4$, le rapport des masses catalyseur/support étant compris entre 0,0024 et 0,0075 pour le platine et de l'ordre de 0,033 pour chaque oxyde.

3. - Masse de contact selon la revendication 1, caractérisée en ce que le catalyseur est constitué par du platine, de l'oxyde de cérium $CeO_2$ et de l'oxyde de manganèse $Mn_3O_4$, le rapport des masses catalyseur/support étant de l'ordre de 0,0076 pour le platine, 0,028 pour l'oxyde de cérium et 0,033 pour l'oxyde de manganèse.

4. - Masse de contact selon la revendication 1, caractérisée en ce que le catalyseur est constitué par du platine, de l'oxyde de chrome $Cr_2O_3$ et de l'oxyde de manganèse $Mn_3O_4$, le rapport des masses catalyseur/support étant compris entre 0,0024 et 0,0075 pour le platine, et de l'ordre de 0,05 pour chaque oxyde.

5. - Masse de contact selon la revendication 1, caractérisée en ce que le catalyseur est constitué par du palladium, de l'oxyde de cérium $CeO_2$ et de l'oxyde de manganèse $Mn_3O_4$, le rapport des masses catalyseur/support étant de l'ordre de 0,012 pour le palladium et de 0,05 pour chaque oxyde.

6. - Masse de contact selon la revendication 1, caractérisée en ce que le catalyseur est constitué par du platine, du palladium, de l'oxyde de cérium $CeO_2$ et de l'oxyde de manganèse $Mn_3O_4$, le rapport des masses catalyseur/support étant de l'ordre de 0,0071 pour le palladium, 0,0008 pour le platine et de 0,05 pour chaque oxyde.

6

7. - Masse de contact selon l'une quelconque des revendications 1 à 6, caractérisée en ce qu'elle contient un inhibiteur de recristallisation choisi parmi les oxydes d'éléments à forte densité électronique.

8. - Procédé de fabrication de la masse catalytique selon l'une quelconque des revendications 1 à 6, caractérisé en ce qu'il consiste à immerger le support dans une solution alcoolique à 70-80° contenant des sels dissous de platine, manganèse et des autres constituants, respectivement à l'état d'acide chloroplatinique et de nitrate, puis à effectuer un traitement thermique libérant le platine à l'état de mousse et les autres éléments sous forme d'oxydes.

9. - Procédé selon l'ensemble des revendications 7 et 8, caractérisé en ce que, dans la mesure où le catalyseur contient un inhibiteur de recristallisation, celui-ci est également mis en oeuvre sous forme d'un sel soluble, de manière à obtenir, après traitement thermique, une forme syncristallisée de tous les constituants.

**0041466**

Numéro de la demande

**Office européen**
**des brevets**

**RAPPORT DE RECHERCHE EUROPEENNE**  EP 81 42 0080

| DOCUMENTS CONSIDERES COMME PERTINENTS | | | CLASSEMENT DE LA DEMANDE (Int. Cl.³) |
|---|---|---|---|
| Catégorie | Citation du document avec indication, en cas de besoin, des parties pertinentes | Revendication concernée | |
| X | FR - A - 2 233 096 (MATSUSHITA ELECTRIC) <br><br> * Page 2, lignes 14-16; page 3, lignes 19-23 * <br><br> -- | 1 | B 01 J 23/34 <br> 23/89 <br> 23/64 <br> 35/06 |
| X | FR - A - 858 064 (LABORATOIRES BELIX) <br><br> * Page 1, lignes 1-20 * <br><br> -- | 1 | |
| | FR - A - 2 250 563 (INTERNATIONAL NICKEL) <br><br> * Revendications 1 et 2 * <br><br> -- | 1-6 | DOMAINES TECHNIQUES RECHERCHES (Int Cl ³) <br><br> B 01 J 23/64 <br> 35/06 <br> 23/34 <br> 23/89 |
| | FR - A - 2 298 524 (IFP) <br><br> * Revendications 1-3; exemple 3; page 1, lignes 7-24 * <br><br> -- | 1-6 | |
| | FR - A - 2 156 586 (AIR PRODUCTS AND CHEMICALS) <br><br> * Revendication 1 * <br><br> -- | 1-6 | |
| A | GB - A - 1 485 370 (UNITED KINGDOM ATOMIC ENERGY AUTHORITY) <br><br> * Revendications 1-3 et 7-11 * <br><br> ---- | 1 | |

CATEGORIE DES DOCUMENTS CITES

X: particulièrement pertinent
A: arrière-plan technologique
O: divulgation non-ecrite
P: document intercalaire
T. théorie ou principe a la base de l'invention
E: demande faisant interference
D· document cite dans la demande
L· document cite pour d'autres raisons

& membre de la même famille.
· document correspondant

Le présent rapport de recherche a été établi pour toutes les revendications

| Lieu de la recherche | Date d'achèvement de la recherche | Examinateur |
|---|---|---|
| La Haye | 10-09-1981 | THION |

OEB Form 1503.1  06.78